Europäisches Patentamt

European Patent Office

Office européen des brevets

(11) Numéro de publication: **0 310 175 B1**

(12) **FASCICULE DE BREVET EUROPEEN**

(45) Date de publication de fascicule du brevet: **13.07.94**   (51) Int. Cl.⁵: **H04N 7/133**

(21) Numéro de dépôt: **88202049.8**

(22) Date de dépôt: **20.09.88**

(54) **Dispositif de codage de signaux vidéo numériques, et dispositif de décodage correspondant.**

(30) Priorité: **29.09.87 FR 8713429**

(43) Date de publication de la demande:
**05.04.89 Bulletin 89/14**

(45) Mention de la délivrance du brevet:
**13.07.94 Bulletin 94/28**

(84) Etats contractants désignés:
**AT DE FR GB IT SE**

(56) Documents cités:
**EP-A- 0 123 456**
**DE-A- 3 414 982**
**US-A- 4 394 774**

**1985 IEEE MILITARY COMMUNICATIONS CONFERENCE, MIICOM '85, 20-23 octobre 1985, Boston, MA., US, "The electronic battle: A new era in military communications", Conference record vol. 2 des 3, pages 628, 634, IEEE Communications Society; H. MAGA1 et al.: "Image coding system - A single processor implementation"**

**IEEE TRANSACTIONS ON CONSUMER ELECTRONICS, vol. CE-31, no. 3, août 1985, pages 301-309, IEEE, New York, US; K.N. NGAN et al.: "Picture transmission for videotex"**

(73) Titulaire: **LABORATOIRES D'ELECTRONIOUE PHILIPS**
**3, Avenue Descartes**
**F-94450 Limeil-Brévannes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB IT SE AT**

(72) Inventeur: **Rémus, Christian Société Civile S.P.I.D.**
**156, Boulevard Haussmann**
**F-75008 Paris(FR)**
Inventeur: **Chantelou, Olivier Société Civile S.P.I.D.**
**156, Boulevard Haussmann**
**F-75008 Paris(FR)**

(74) Mandataire: **Landousy, Christian et al**
**Société Civile S.P.I.D.**
**156, Boulevard Haussmann**
**F-75008 Paris (FR)**

**IEEE INTERNATIONAL CONFERENCE ON COMMUNICATIONS '86, Toronto, Canada, 22-25 juin 1986, ICC'86, "Integrating the world through communications", Conference Record, vol. 2 des 3, pages 1285-1289, IEEE; A.A. ABDELWAHAB et al.: " Image data compression with vector quantization in the transform domain"**

## Description

La présente invention concerne un dispositif de codage de signaux vidéo numériques comprenant un circuit de réduction de corrélation, qui reçoit lesdits signaux numériques représentatifs de la luminance ou de la chrominance d'un certain nombre de points d'une image divisée en blocs, un circuit de conversion de balayage, qui transforme la suite bidimensionnelle des valeurs des coefficients $F_i(u,v)$ de sortie du circuit de réduction de corrélation en une suite monodimensionnelle, un circuit de normalisation, un circuit de quantification, qui convertit chaque valeur normalisée de sortie du circuit de normalisation en une valeur entière, un circuit de codage desdites valeurs quantifiées, un circuit de régulation de débit, qui reçoit selon un débit variable lesdites valeurs codées et, d'une part, renvoie une valeur de norme moyenne liée audit débit vers le circuit de normalisation, d'autre part, délivre sur la sortie du dispositif de codage des valeurs codées avec un débit constant. L'invention concerne aussi un dispositif de décodage correspondant à un tel dispositif de codage.

La numérisation des signaux de télévision, en vue de leur transmission ou de leur enregistrement, est une solution extrêmement utile dans le cas de liaisons où le bruit perturbateur est particulièrement important, les liaisons par satellite notamment. Une image de télévision contient cependant une très grande quantité d'informations, dont la représentation numérique se traduit par un débit élevé. En échantillonnant les composantes du signal de télévision à une fréquence satisfaisant la condition de Shannon et en opérant une quantification uniforme en 256 niveaux, la numérisation directe des composantes de luminance et de chrominance aux fréquences de 13,5 et de 6,75 mégahertz respectivement, imposées par les normes, conduirait en effet à un débit de 216 Meb/s. Ce débit est tout à fait prohibitif, notamment dans le cas de dispositifs d'enregistrement magnétique grand public. L'emploi de techniques de réduction de débit est donc nécessaire, et d'autant plus réalisable qu'une redondance relativement importante existe dans l'image.

Le brevet des Etats-Unis d'Amérique US-A-4 394 774 décrit un exemple de dispositif de compression de données qui réalise un codage des signaux vidéo par transformation orthogonale. Ce codage est obtenu en découpant chaque image en blocs de taille déterminée, puis en appliquant ladite transformation orthogonale à chaque bloc. Les coefficients issus de cette transformation sont alors divisés par un facteur de normalisation, puis quantifiés et codés. Un tel dispositif ne tient cependant pas compte des caractéristiques propres de chaque bloc, en particulier de l'activité de ces blocs.

L'influence du codage utilisé est telle, par exemple, que celui-ci introduit sur les contours des défauts d'amplitude très différents selon la position des contours dans le bloc.

Le but de l'invention est de proposer un dispositif de codage de signaux vidéo qui remédie à ce type d'inconvénient.

A cet effet, l'invention concerne un dispositif caractérisé en ce que ledit circuit de normalisation comprend lui-même :

(a) une mémoire de stockage de coefficients de pondération, adressée d'une part par l'indice i de position de chaque valeur $F_i(u,v)$ du bloc courant, présent sur une première connexion d'entrée du circuit de normalisation et fourni par le circuit de réduction de corrélation, et d'autre part par une valeur représentative de l'activité du bloc courant, présente sur une deuxième connexion d'entrée et également fournie par ce circuit de réduction de corrélation mais par l'intermédiaire d'un circuit de détermination de classe prévu en série entre ledit circuit de réduction de corrélation et ladite mémoire de stockage ;

(b) un circuit de calcul de norme, à partir d'une part de ladite valeur de norme moyenne fournie par le circuit de régulation de débit et d'autre part du coefficient de pondération fourni par ladite mémoire de stockage du circuit de normalisation ;

(c) un circuit de division de la sortie du circuit de conversion de balayage par le coefficient $K_i$ correspondant de sortie dudit circuit de calcul de norme.

La structure proposée remédie en effet aux imperfections et distorsions entraînées par le codage, et ce en prévoyant d'opérer une classification sur chaque bloc transformé, selon un critère de classification prenant en compte la nature du contenu du bloc à coder. Ce critère peut être par exemple la comparaison entre le maximum de la valeur absolue des coefficients du bloc (hors composante continue) et un certain nombre de seuils. Des essais satisfaisants ont été obtenus notamment avec quatre classes et trois seuils de valeurs fixées à 10, 25 et 50 pour une dynamique des échantillons numériques comprise entre 0 et 256.

Une telle classification réduit bien la visibilité des défauts constatés (visibilité des structures des blocs sur les zones quasi-uniformes et niveau de bruit important le long des contours). La visibilité de la structure des blocs peut encore être réduite sur les zones uniformes : on peut réduire le pas de quantification sur les blocs de ce type (à peu près uniformes) et l'augmenter au contraire sur ceux contenant des coefficients d'amplitude élevée, ou modifier le pas de quantification en fonction de la position du coefficient, en le réduisant pour les blocs de peu d'activité pour bien restituer les coefficients basse fréquence alors que, pour les blocs plus contrastés, une bonne restitution implique une quantification assez fine des hautes fréquences spatiales.

L'invention ainsi proposée, en différenciant les traitements en fonction de la nature du contenu des blocs à coder, permet de prendre en compte non seulement des mesures objectives d'activité, mais également des corrélations établies entre ces critères objectifs et des critères psychovisuels.

Les particularités de l'invention apparaîtront maintenant de façon plus détaillée dans la description qui suit et dans les dessins annexés, donnés à titre d'exemples non limitatifs et dans lesquels :
- la figure 1 montre un exemple de réalisation du dispositif de codage selon l'invention ;
- la figure 2a montre une image divisée en N x M blocs, la figure 2b représente la matrice bidimensionnelle des coefficients de transformation d'un de ces blocs d'image, la figure 2c met en évidence un type de parcours monodimensionnel pour la lecture et le traitement desdits coefficients, la figure 2d montre un autre type de parcours pour un bloc de 32 points d'image, et la figure 2e montre par rapport à la figure 2c une variante de parcours dans laquelle les coefficients sont successivement lus dans différents blocs ;
- la figure 3 est une courbe

$$X'_i = f(X_i)$$

correspondant à l'opération de compression réalisée après la conversion de balayage ;
- la figure 4 montre un exemple de variation du coefficient de normalisation (et donc du pas de quantification) en fonction de la position des coefficients et pour différentes classes ;
- la figure 5 montre un exemple de réalisation du dispositif de décodage associé au dispositif de codage de la figure 1.

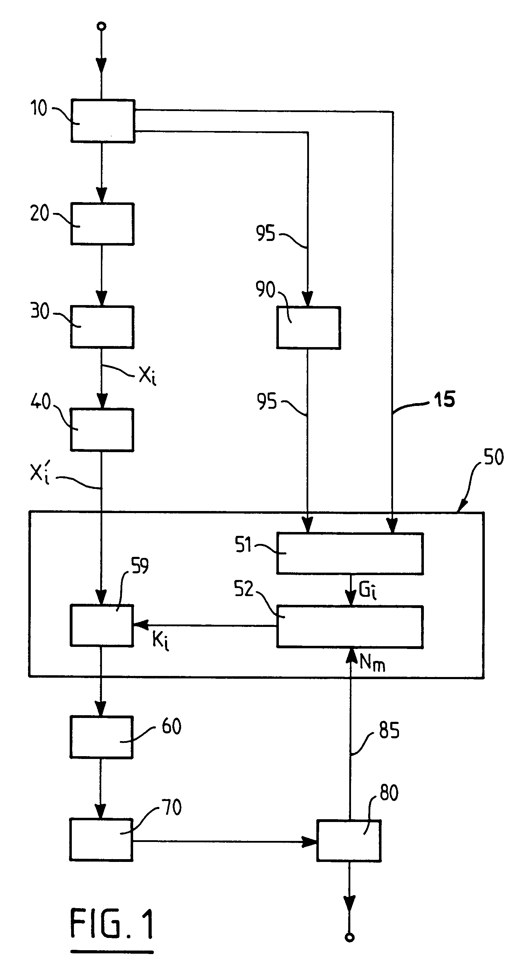

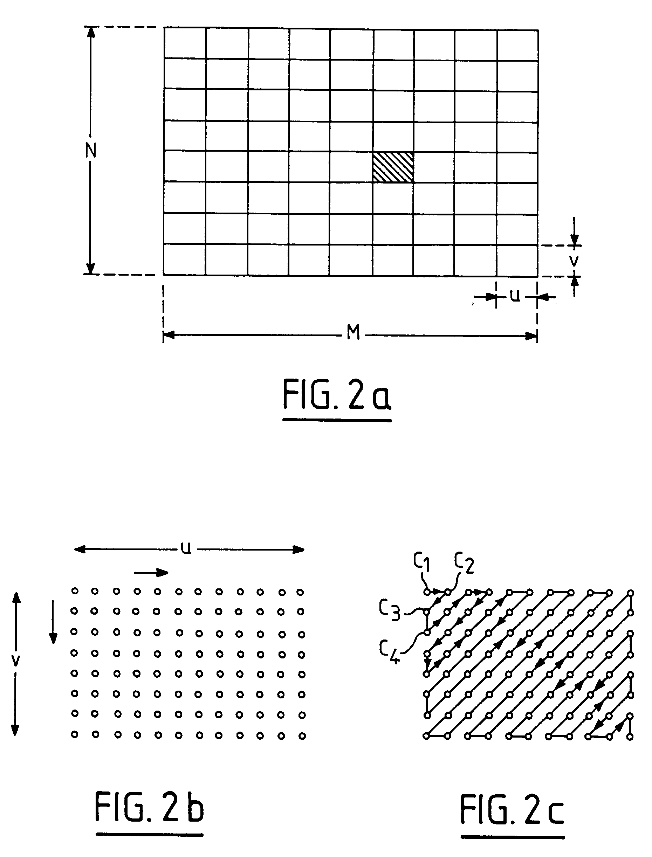

Dans l'exemple de réalisation représenté sur la figure 1, le dispositif selon l'invention comprend d'abord un circuit de transformation en cosinus discret 10. Ce circuit 10 reçoit une suite de signaux numériques représentant sous la forme d'une matrice de valeurs la luminance ou la chrominance d'un certain nombre de points ou éléments d'une image divisée en blocs, et délivre pour chaque bloc une suite bidimensionnelle de coefficients $F_i(u,v)$. La figure 2a montre une telle image, divisée en M x N blocs. La transformation en cosinus discret est une opération connue, et l'expression de ces coefficients de transformation obtenus successivement pour chaque bloc ne sera donc pas donnée ici. On rappellera simplement que de nombreuses mesures statistiques ont permis de montrer la très forte corrélation entre points voisins d'une trame ou d'une image, et que l'objet de la transformation est d'obtenir un ensemble de coefficients plus indépendants que les valeurs disponibles avant transformation.

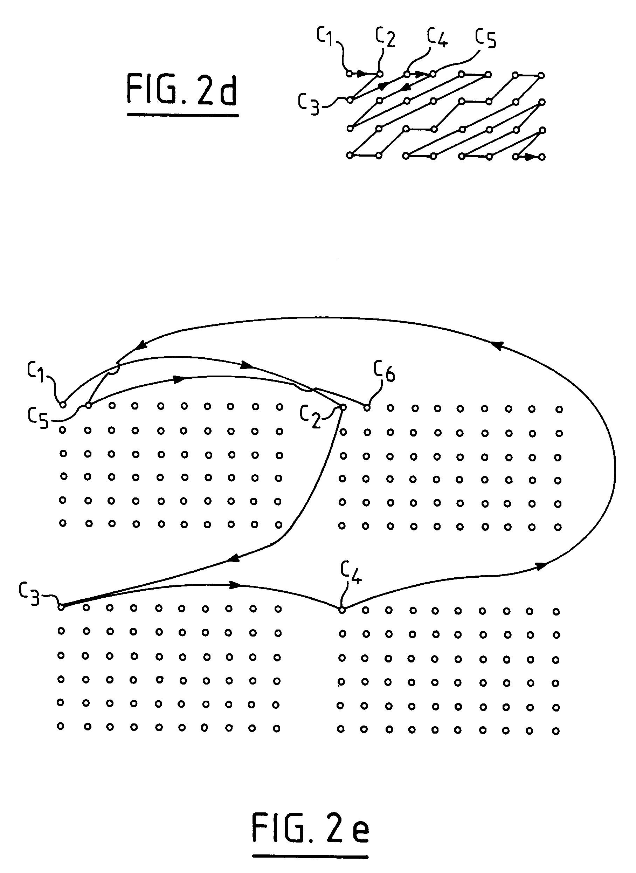

Les valeurs $F_i(u,v)$ sont alors fournies, par l'intermédiaire d'un circuit à retard 20, à un circuit de conversion de balayage 30 destiné à convertir la suite bidimensionnelle de valeurs $F_i(u,v)$ en une suite monodimensionnelle. Pour un bloc tel que celui de la figure 2b, correspondant lui-même à celui indiqué avec des hachures sur la figure 2a, cette suite monodimensionnelle peut être par exemple une suite en zig-zag comme celle indiquée sur la figure 2c qui montre, dans une représentation de la matrice bidimensionnelle des coefficients de transformation du bloc d'image, un type de parcours définissant l'ordre de lecture ($C_1$, $C_2$, $C_3$,...etc...) et de traitement de ces coefficients. Ce type de parcours présente l'avantage suivant, à savoir qu'il permet, après l'opération de quantification prévue plus loin, de rencontrer de longues plages de valeurs nulles, ce qui contribue à réduire la quantité d'informations à transmettre. Cette suite monodimensionnelle pourrait cependant être constituée sur la base d'un autre critère, par exemple selon le type de parcours représenté sur la figure 2d pour un bloc de u x v = 32 éléments d'images, ou être d'un autre type que ceux représentés, par exemple être déterminée de façon adaptative en fonction de caractéristiques mesurées sur le signal lui-même. Il est également possible d'opérer une lecture des coefficients dans différents blocs, par exemple une lecture successive dans chacun des quatre blocs spatialement voisins de la figure 2e, en lisant les coefficients $C_1$, $C_2$, $C_3$, $C_4$, puis les coefficients $C_5$, $C_6$,etc... et ainsi de suite sur le type de parcours adopté.

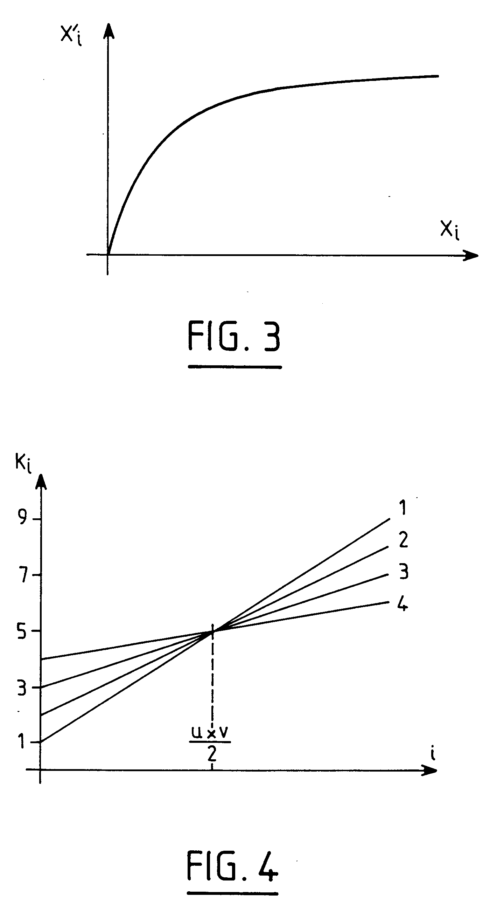

Un circuit de compression 40 reçoit alors cette suite monodimensionnelle, appelée par exemple $X_i$, pour délivrer une nouvelle suite monodimensionnelle $X'_i$, la suite des $X'_i$ étant obtenue à partir des $X_i$ selon une courbe de transformation telle que celle de la figure 3. On va voir plus loin l'existence d'une opération de quantification : si cette opération de quantification s'effectue avec un pas variable, le circuit de compression 40 peut être omis. Si au contraire la quantification est linéaire, la présence du circuit de compression permet de reconstituer globalement une transformation à pas variable. Cette compression systématique est, dans l'un ou l'autre cas, justifiée par le fait que l'oeil est plus sensible aux distorsions affectant les petites valeurs d'amplitude plutôt que les grandes.

Sans que la quantification soit nécessairement adaptative, il importe en tout cas de noter, comme on le précise plus loin, qu'un tel caractère adaptatif est avantageux. Il permet en effet de modifier le pas de quantification selon la nature plus ou moins uniforme de l'image, ou des blocs de l'image, et influe également sur le codage, une quantification plus rudimentaire entraînant l'utilisation de mots de code plus courts et donc une réduction du débit.

En sortie du circuit de compression 40, ou du circuit de conversion de balayage 30 si le circuit 40 est omis, il est ensuite prévu un circuit de normalisation 50. Ce circuit de normalisation 50 comprend, comme indiqué sur la figure 1, un circuit de division 59 de la sortie du circuit de compression 40, ou de la sortie du circuit de conversion de balayage 30, par un paramètre $K_i$ déterminé comme indiqué ci-après. Ce paramètre $K_i$ est considéré comme dépendant d'une part de la place, dans le bloc courant, du coefficient se présentant sur l'entrée "dividende" du circuit de division 59, c'est-à-dire du coefficient obtenu une fois la conversion de balayage opérée pour disposer d'une suite monodimensionnelle. Ceci est justifié par le fait que les informations visuelles essentielles d'une image correspondent aux fréquences spatiales les plus basses, correspondant elles-mêmes aux premiers coefficients de la matrice bidimensionnelle des coefficients de transformation, lorsque celle-ci est lue et traitée selon un parcours du type de celui de la figure 2c, ou de la figure 2d. Ce paramètre $K_i$ dépend d'autre part de la norme moyenne $N_m$ sur le bloc, c'est-à-dire du taux de remplissage de la mémoire de régulation, prévue, comme indiqué plus loin, dans le circuit de régulation de débit qui constitue l'élément terminal du dispositif de codage selon l'invention.

Par ailleurs, tout codeur qui opère sur des blocs introduit généralement deux types de distorsions. Les premières, appelées effet de grillage, se produisent dans les zones quasi-uniformes où les variations d'intensité sont extrêmement progressives. Après codage, on observe dans ces zones de soudains changements d'intensité de bloc à bloc, dont l'effet visuel est très gênant. Les secondes résultent des composantes du bruit de codage qui sont en dehors de la bande passante des contours et qui distordent ces contours, alors que les composantes de bruit situées dans la bande spectrale des contours sont, elles, masquées par lesdits contours.

Il a donc paru intéressant de réduire la visibilité de ces deux types de distorsions, en adaptant la quantification des coefficients de chaque bloc selon que le bloc considéré est uniforme ou quasi-uniforme ou au contraire qu'il contient des contours de plus ou moins fort contraste, c'est-à-dire selon ce qu'on appelle la classe d'activité du bloc.

Le paramètre $K_i$ est donc considéré comme dépendant de la classe d'activité du bloc courant, qui va traduire l'importance de la luminance moyenne attachée au bloc considéré. Plusieurs variantes de définition de la classe peuvent être retenues. Le critère d'activité qui a été ici adopté est de rechercher dans un bloc l'expression max $F_i(u,v)$, avec $i = 2$ à $(u \times v)$, $F_i(u,v)$ étant la valeur du coefficient d'ordre i après transformation en cosinus discret et conversion de balayage, et $(u \times v)$ étant le nombre total de coefficients du bloc. On exclut en effet de cette recherche le premier coefficient. Ce coefficient, situé en tête de la matrice des coefficients de chaque bloc, est en effet codé d'une manière particulière (par exemple, quantification linéaire puis codage par neuf bits) pour éviter que des différences de luminance d'un bloc à l'autre soient perçues par l'oeil. Mais d'autres critères de définition de l'activité pourraient être retenus, par exemple la valeur de la somme des coefficients élevés au carré.

La place dans le bloc courant est fournie par l'indice i qui affecte chaque coefficient et qui est fourni au circuit 50 par une connexion 15 provenant de la sortie du circuit de transformation en cosinus discret 10. La norme moyenne sur le bloc courant, qui est une valeur d'autant plus élevée que la mémoire de régulation est plus remplie, est fournie au circuit 50 par une connexion 85 provenant de la sortie de ladite mémoire de régulation.

La classe d'activité, dans l'exemple ici décrit et représenté, est fournie par comparaison, à des seuils, de la valeur absolue des coefficients (à l'exception du premier). Dans le cas présent, trois seuils et donc quatre classes d'activité ont été retenus. La comparaison est effectuée dans un circuit de détermination de classe 90 prévu en sortie du circuit de transformation en cosinus discret 10 et relié au circuit 50 par une connexion 95. Les seuils introduits dans le circuit 90 ont été préalablement définis, par exemple soit à l'aide de tests subjectifs, en fonction de la classification que l'on estime préférable sur un certain nombre d'images de référence, soit en imposant une équirépartition des blocs dans les différentes classes, l'activité la plus faible correspondant donc au cas où le bloc considéré est pratiquement uniforme, ou avec des contours peu contrastés.

En fonction de la classe ainsi définie et de la place dans le bloc fournie par l'indice i, une mémoire 51 du circuit 50 fournit un coefficient $G_i$ qui est envoyé vers un circuit de calcul de norme 52. Ce circuit 52 pondère à l'aide de ce coefficient $G_i$ la valeur de norme moyenne $N_m$ fournie par la connexion 85 et délivre finalement le paramètre $K_i$ qui est envoyé sur l'entrée "diviseur" du circuit de division 59. Cette pondération contribue à rendre minimales les distorsions mentionnées précédemment et dues au codage par blocs. Elle permet en effet de faire varier selon la classe la pente de la courbe qui donne en fonction de l'ordre du coefficient le paramètre de normalisation $K_i$, et donc le pas de quantification. Un exemple de ces courbes est représenté sur la figure 4, dans le cas de quatre classes notées 1 à 4 dans l'ordre des activités croissantes, et l'on peut faire les deux constatations suivantes. D'une part, pour les blocs de faible activité, les basses fréquences sont davantage privilégiées, ce qui permet de réduire notablement la visibilité de l'effet de grillage. D'autre part, pour les blocs de plus forte activité traversés par des contours, les hautes fréquences prennent une importance non négligeable et, en quantifiant de façon plus uniforme l'ensemble des coefficients, on évite une trop forte perte de résolution.

Le circuit de normalisation 50 est suivi d'un circuit de quantification 60. L'opération de quantification est destinée, on le sait, à convertir la valeur normalisée de chaque coefficient, exprimée avec une virgule flottante, en une valeur entière, soit par un simple arrondi, soit de préférence par troncature, en prenant la partie entière de la valeur avant quantification. Il est bien évident que, soumises à une telle quantification, un certain nombre de valeurs comprises entre 0 et 1 sont remplacées par la valeur 0, ce qui diminue le nombre de coefficients significatifs à transmettre et va donc dans le sens de la compression de données recherchée. Un tel circuit de quantification est connu et ne sera donc pas décrit davantage. On rappellera simplement, comme on l'a vu plus haut, que la quantification peut être linéaire ou au contraire à pas variable.

La sortie du circuit de quantification 60 est alors envoyée, de façon connue, vers un circuit de codage 70, comprenant ici des tables de valeurs codées selon un code de Huffman, pour le codage soit de valeurs de coefficients (codage à longueur variable) soit de longueurs de plages (codage par plages). La sortie du circuit de codage 70 est enfin reliée à l'entrée d'un circuit de régulation de débit 80, qui reçoit donc selon un débit variable les valeurs ainsi codées et les restitue sur sa sortie principale avec un débit constant. Cette sortie principale constitue la sortie du dispositif de codage selon l'invention. Une sortie auxiliaire du circuit de régulation de débit renvoie vers le circuit de normalisation 50, par la connexion de retour 85, la valeur de norme moyenne $N_m$ utilisée pour composer la valeur du paramètre global de normalisation (le paramètre $K_i$) par lequel est divisée la sortie du circuit de compression 40 (ou du circuit de conversion de balayage si ce circuit 40 est omis).

Il est manifeste que l'invention n'est pas limitée par la forme (carrée ou rectangulaire notamment) ou par les dimensions des blocs qui subdivisent l'image. Cependant, comme la corrélation entre points voisins d'une image (ou d'une trame) décroît lorsque la distance entre ces points augmente, il est judicieux d'opérer la transformation cosinus, dans le circuit 10, sur des blocs de dimensions réduites, par exemple des blocs 8 x 4 comme celui de la figure 2d. Ce choix conduit en outre à faire varier de façon plus fine le paramètre de normalisation en fonction de l'activité des blocs.

Il est à noter également que la transformation en consinus discret subie par les signaux numériques d'entrée n'est pas la seule possible, bien que ce soit l'une de celles qui conduisent aux meilleures performances du dispositif de décodage. D'autres transformations, telles que par exemple la transformation de Hadamard ou celle de Slant, conduisent, de façon similaire, à une réduction de corrélation des signaux, les coefficients obtenus étant plus indépendants que les valeurs disponibles avant transformation.

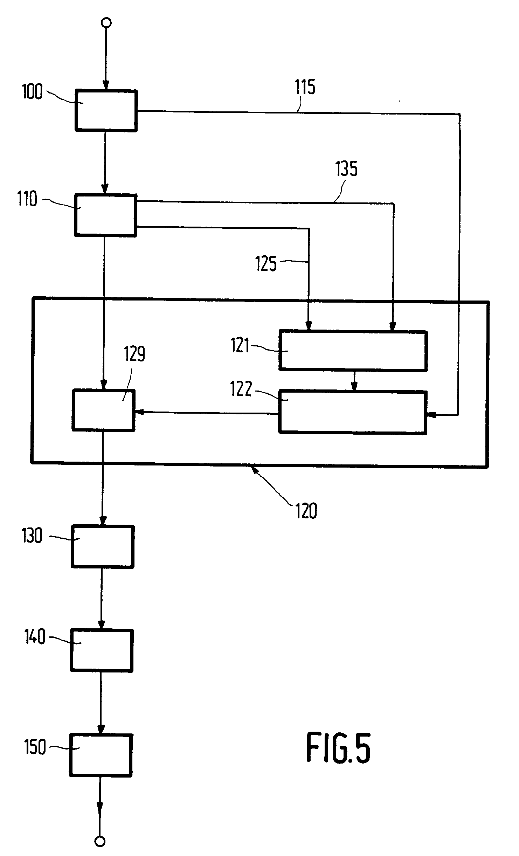

Par ailleurs, l'invention concerne également le dispositif de décodage permettant d'effectuer les opérations inverses de celles qui viennent d'être décrites, à la réception de signaux vidéo numériques ayant subi un tel codage. Dans l'exemple de réalisation de la figure 5, ce dispositif de décodage comprend en entrée un circuit de régulation de débit 100 qui reçoit selon le débit du canal les éléments binaires envoyés par le dispositif de codage et les restitue sur sa sortie principale avec un débit variable. Cette sortie principale est reliée à un circuit de décodage 110 qui, en l'absence d'erreurs sur le canal, reconstitue fidèlement les informations qui étaient présentes à l'émission à l'entrée du circuit de codage. Une sortie auxiliaire 115 du circuit 100 délivre en fonction de son degré de remplissage la valeur de norme moyenne Nm utilisée pour recomposer la valeur du paramètre global de normalisation Ki.

Afin d'obtenir, dans un circuit de normalisation 120, une normalisation inverse parfaite, c'est-à-dire un comportement symétrique par rapport à celui du dispositif de codage, ce paramètre est calculé non seulement en fonction de Nm, mais aussi en fonction de la position du coefficient et de la classe à laquelle appartient le bloc. La classe est transmise en ligne et est délivrée sur une sortie auxiliaire 125 du circuit de décodage 110. La place dans le bloc courant est fournie sur une autre sortie auxiliaire 135 de ce même circuit de décodage 110.

De même qu'au codage, en fonction de la classe et de la place dans le bloc fournie par l'indice i, une mémoire 121 du circuit de normalisation 120 fournit un coefficient Gi qui est envoyé vers un circuit de calcul de norme 122. Ce circuit pondère à l'aide de ce coefficient la valeur de norme moyenne Nm fournie par la connexion 115, et délivre finalement le paramètre Ki qui est envoyé non plus sur un circuit diviseur mais sur un circuit de multiplication 129.

La sortie du circuit de normalisation 120 est ensuite éventuellement décomprimée dans un circuit 130. Cette décompression est symétrique de l'opération de compression effectuée au niveau du circuit 40 et n'intervient que si le circuit 40 était lui-même présent dans le dispositif de codage, c'est-à-dire lorsque la quantification opérée était non-linéaire. Les valeurs obtenues sont alors fournies à un circuit de conversion de balayage 140 destiné à convertir la suite monodimensionnelle de valeurs en une suite bidimensionnelle $F'_i(u,v)$, puis un circuit 150 de transformation inverse permet de reconstituer des blocs de points d'image, ladite transformation étant l'inverse de celle effectuée dans le dispositif de codage par le circuit de réduction de corrélation.

**Revendications**

1. Dispositif de codage de signaux vidéo numériques comprenant un circuit de réduction de corrélation (10), qui reçoit lesdits signaux numériques représentatifs de la luminance ou de la chrominance d'un certain nombre de points d'une image divisée en blocs, un circuit de conversion de balayage (30), qui transforme la suite bidimensionnelle des valeurs des coefficients $F_i(u,v)$ de sortie du circuit de réduction de corrélation (10) en une suite monodimensionnelle, un circuit de normalisation (50), un circuit de quantification (60), qui convertit chaque valeur normalisée de sortie du circuit de normalisation en une valeur entière, un circuit (70) de codage desdites valeurs quantifiées, et un circuit de régulation de débit (80), qui reçoit selon un débit variable lesdites valeurs codées et, d'une part, renvoie une valeur de norme moyenne $N_m$ liée audit débit vers le circuit de normalisation (50), d'autre part, délivre sur la sortie du dispositif de codage des valeurs codées avec un débit constant, caractérisé en ce que ledit circuit de normalisation comprend lui-même :

   (a) une mémoire (51) de stockage de coefficients de pondération, adressée d'une part par l'indice i de position de chaque valeur $F_i(u,v)$ du bloc courant, présent sur une première connexion d'entrée (15) du circuit de normalisation (50) et fourni par le circuit de réduction de corrélation (10), et d'autre part par une valeur représentative de l'activité du bloc courant, présente sur une deuxième connexion d'entrée (95) et également fournie par ce circuit de réduction de corrélation mais par l'intermédiaire d'un circuit de détermination de classe (90) prévu en série entre ledit circuit de réduction de corrélation et ladite mémoire de stockage ;

   (b) un circuit (52) de calcul de norme $K_i$, à partir d'une part de ladite valeur de norme moyenne $N_m$ fournie par le circuit de régulation de débit (80) et d'autre part du coefficient de pondération fourni par ladite mémoire (51) de stockage du circuit de normalisation ;

   (c) un circuit (59) de division de la sortie du circuit de conversion de balayage (30) par le coefficient $K_i$ correspondant de sortie dudit circuit (52) de calcul de norme.

2. Dispositif selon la revendication 1, caractérisé en ce que le circuit de détermination de classe (90) comprend des moyens de comparaison d'une valeur représentative du bloc courant à (n-1) seuils distincts, et des moyens de sélection parmi n valeurs distinctes de classe, selon le résultat desdites (n-1) comparaisons.

3. Dispositif selon la revendication 2, caractérisé en ce que ladite valeur représentative du bloc courant est la valeur absolue du plus grand des coefficients $F_i(u,v)$ de ce bloc courant, le premier coefficient $F(0,0)$ dudit bloc étant exclu de cette sélection d'une valeur représentative du bloc.

4. Dispositif selon la revendication 2, caractérisé en ce que ladite valeur représentative du bloc courant est la valeur de la somme des coefficients $F_i(u,v)$ élevés au carré, le premier coefficient $F(0,0)$ dudit bloc étant exclu de cette sélection d'une valeur représentative du bloc.

5. Dispositif de décodage de signaux vidéo numériques ayant subi un codage dans un dispositif de codage selon l'une des revendications 1 à 4, ledit dispositif de décodage comprenant en série un deuxième circuit de régulation de débit (100), un circuit de décodage (110), un circuit de normalisation inverse (120), un circuit de conversion de balayage inverse (140), et un circuit (150) de transformation inverse de celle effectuée par ledit circuit de réduction de corrélation, caractérisé en ce que le circuit de normalisation (120) comprend lui-même :

   (a) une deuxième mémoire (121) de stockage de coefficients de pondération, adressée d'une part par l'indice i de position du bloc courant, présent sur une première connexion d'entrée (125) du circuit de normalisation inverse (120) et fourni par le circuit de décodage (110), et d'autre part par une valeur représentative de l'activité du bloc courant, présente sur une deuxième connexion d'entrée (135) et également fournie par le circuit de décodage (110) ;

(b) un deuxième circuit (122) de calcul de norme K$_i$, à partir d'une part de la valeur de norme moyenne N$_m$ fournie par le deuxième circuit de régulation de débit (100) et d'autre part du coefficient de pondération fourni par ladite deuxième mémoire (121) de stockage ;

(c) un circuit (129) de multiplication de la sortie du circuit de décodage (110) par le coefficient K$_i$ correspondant de sortie dudit deuxième circuit (122) de calcul de norme.

**Claims**

1. A digital video signal encoding arrangement, comprising a correlation reducing circuit (10) receiving said digital signals which are representative of the luminance or the chrominance of a certain number of elements of a picture which has been divided into blocks, a scanning conversion circuit (30) transforming the bidimensional sequence of the values of the output coefficients F$_i$(u,v) of the correlation reducing circuit (10) into a monodimensional sequence, a normalization circuit (50), a quantizing circuit (60) which converts each normalized output value of the normalization circuit into an integral value, a circuit (70) for encoding said quantized values, a rate controlling circuit (30) receiving said encoded values in accordance with the variable rate and, on the one hand, returns to the normalization clrcuit (50) a mean standard value N$_m$ which is linked to said rate and, on the other hand, supplies encoded values at a constant rate from the output of the encoding arrangement, characterized in that the normalization circuit itself comprises:

(a) a memory (51) for storing the weighting coefficients, which on the one hand is addressed by the index i indicating the position of each value F$_i$(u,v) of the current block, available at a first input line (15) of the normalization circuit (50) and supplied by the correlation reducing circuit (10) and on the other hand by a value which is representative of the activity of the current block, available at a second input line (95) and also supplied by this correlation reducing circuit, but via a circuit (90) for determining the class, arranged in series between said correlation reducing circuit and said storage memory;

(b) a circuit (52) for calculating the standard K$_i$ on the basis of, on the one hand, said mean standard value N$_m$ supplied by the rate controlling circuit (80) and, on the other hand, of the weighting coefficient supplied by said storage memory (51) of the normalization circuit;

(c) a circuit (59) for dividing the output of the scanning conversion circuit (30) by the coefficient K$_i$ corresponding to the output of said standard calculating circuit (52).

2. An arrangement as claimed in Claim 1, characterized in that the class determining circuit (90) comprises means for comparing a value which is representative of the current block and has (n-1) separate thresholds, and selection means for selecting from n separate class values in accordance with the result of said (n-1) comparisons.

3. An arrangement as claimed in Claim 2, characterized in that said value representative of the current block is the absolute value of the highest of the coefficients F$_i$(u,v) of this current block, the first coefficient F(O,O) of said block being excluded from this operation of selecting a value representative of the block.

4. An arrangement as claimed in Claim 2, characterized in that said value which is representative of the current block is the value of the sum of the squared coefficients F$_i$(u,v), the first coefficient F(O,O) of this block being excluded from this operation of selecting a value representative of the block.

5. An arrangement for decoding digital video signals which were submitted to an encoding operation in an encoding arrangement as claimed in any one of Claims 1 to 4, said decoding arrangement comprising, arranged in series, a second rate controlling circuit (100), a decoding circuit (110), an inverse normalization circuit (120), an inverse scanning conversion circuit (140), and an inverse transform circuit (150) effecting the operations inverse to that effected by said correlation reducing circuit, characterized in that the normalization circuit (120) itself comprises:

(a) a second weighting coefficient storage memory (121) which is addressed on the one hand by the index i of the position of the current block, available at a first input line (125) of the inverse normalisation circuit (120) and supplied by the decoding circuit (110), and on the other hand by a value which is representative of the activity of the current block, available at a second input line (135) and also supplied by the decoding circuit (110);

(b) a second circuit (122) for calculating the standard K$_i$ on the basis of the value of the

mean standard $N_m$ produced by the second rate controlling circuit (100) and also the weighting coefficient produced by said second storage memory (121);

(c) a circuit (129) for multiplying the output of the decoding circuit (110) by the corresponding output coefficient $K_i$ of said second standard calculating circuit (122).

## Patentansprüche

1. Vorrichtung zum Codieren von digitalen Videosignalen mit einer Korrelationsreduktionsschaltung (10), welche die besagten digitalen Signale erhält, welche typisch sind für die Bildleuchtdichte oder die Farbsättigung einer bestimmten Anzahl von Punkten eines in Blöcke aufgeteilten Bildes, einer Abtastumwandlungsschaltung (30), welche die zweidimensionale Folge der Ausgangskoeffizientenwerte $F_i$ (u,v) der Korrelationsreduktionsschaltung (10) in eine monodimensionale Folge umwandelt, einer Normalisierungsschaltung (50), einer Quantisierungsschaltung (60), die jeden normalisierten Ausgangswert von der Normalisierungsschaltung in einen vollen Wert umwandelt, einer Codierschaltung (70) der besagten quantisierten Werte und einer Übertragungsgeschwindigkeitsregelungsschaltung (80) welche entsprechend einer veränderlichen Übertragungsgeschwindigkeit die genannten codierten Werte erhält, und einerseits einen mit der Übertragungsgeschwindigkeit verknüpften mittleren Normwert Nm an die Normalisierungsschaltung (50) zurückgibt und andererseits mit einer konstanten Übertragungsgeschwindigkeit codierte Werte an den Ausgang der Codiervorrichtung liefert, dadurch gekennzeichnet, daß die besagte Normalisierungsschaltung folgendes enthält:

(a) einen Speicher (51) zum Speichern von Gewichtungskoeffizienten, der einerseits durch den Lagenindex i jedes Wertes $F_i$ - (u,v) des Blockes, der sich gerade auf einer ersten Eingangsverbindung (15) der Normalisierungsschaltung (50) befindet und von der Korrelationsreduktionsschaltung (10) geliefert wird, und andererseits durch einen typischen Wert der Wirksamkeit des bestehenden Blocks adressiert ist, der sich auf einer zweiten Eingangsverbindung (95) befindet und ebenfalls von dieser Korrelationsreduktionsschaltung geliefert wird, jedoch über eine Klassenbestimmungsschaltung (90), die seriell zwischen der besagten Korrelationsreduktionsschaltung und dem besagten Speicher vorgesehen ist;

(b) eine Normberechnungsschaltung (52) zum Berechnen der Norm $K_i$ aus einerseits dem besagten, von der Übertragungsgeschwindigkeitsregelungsschaltung (80) gelieferten mittleren Normwert und andererseits dem Gewichtungskoeffizienten, der von dem besagten Speicher (51) der Normalisierungsschaltung geliefert wird;

(c) eine Teilungsschaltung (59) zum Teilen des Ausgangs der Abtastumwandlungsschaltung (30) durch den Koeffizienten $K_i$ entsprechend dem Ausgang der genannten Normberechnungsschaltung (52).

2. Vorrichtung nach dem Anspruch 1, dadurch gekennzeichnet, daß die Klassenbestimmungsschaltung (90) Vergleichsmittel zum Vergleichen eines typischen Wertes des laufenden Blocks mit (n-1) verschiedenen Schwellen und Auswahlmittel zum Wählen zwischen n verschiedenen Klassenwerten, je nach Ergebnis der besagten (n-1) Vergleiche, enthält.

3. Vorrichtung nach dem Anspruch 2, dadurch gekennzeichnet, daß der besagte typische Wert des laufenden Blocks der Absolutwert des größten Koeffizienten $F_i$ (u,v) dieses laufenden Blocks ist, wobei der erste Koeffizient F (0,0) des besagten Blocks von dieser Auswahl eines typischen Wertes des Blocks ausgeschlossen ist.

4. Vorrichtung nach dem Anspruch 2, dadurch gekennzeichnet, daß der besagte typische Wert des laufenden Blocks den Wert der Summe der Koeffizienten $F_i$ (u,v) im Quadrat darstellt, wobei der erste Koeffizient F (0,0) des besagten Blocks von dieser Auswahl eines typischen Wertes des Blocks ausgeschlossen ist.

5. Vorrichtung zum Decodieren von digitalen Videosignalen, die bereits in einer Codiervorrichtung nach einem der Ansprüche 1 bis 4 einer Codierung unterzogen wurden, wobei die besagte Decodiervorrichtung in Reihe eine zweite Übertragungsgeschwindigkeitsregelungsschaltung (100), eine Decodierschaltung (110), eine reziproke Normalisierungsschaltung (120), eine reziproke Abtastkonversionsschaltung (140) und eine Umwandlungsschaltung (150) enthält, wobei die Umwandlung reziprok ist zu der durch die besagte Korrelationsreduktionsschaltung bewirkten Umwandlung, dadurch gekennzeichnet, daß die Normalisierungsschaltung (120) selbst folgende Elemente enthält:

(a) einen zweiten Speicher (121) zum Speichern von Gewichtungskoeffizienten, der einerseits durch den Lagenindex i des laufenden Blocks, der sich auf einer ersten Eingangsverbindung (125) der reziproken Normalisierungsschaltung (120) befindet und von der Decodierschaltung (110) geliefert wird, und andererseits durch einen Wert, repräsentativ für die Wirkung des laufenden Blocks, der sich an einer zweiten Eingangsverbindung (135) befindet und ebenfalls von der Decodierschaltung (110) geliefert wird, adressiert ist;

(b) eine zweite Normberechnungsschaltung (122) zum Berechnen der Norm $K_i$, aus einerseits dem von der Übertragungsgeschwindigkeitsregelungsschaltung (100) gelieferten mittleren Normwert $N_m$ und andererseits dem Gewichtungskoeffizienten, der von dem besagten zweiten Speicher (121) geliefert wird;

(c) eine Multiplikationsschaltung (129) zum Multiplizieren des Ausgangs der Decodierschaltung (110) mit dem entsprechenden Ausgangskoeffizienten $K_i$ der besagten zweiten Normberechnungsschaltung (122).

FIG. 1

## FIG. 2 a

## FIG. 2 b

## FIG. 2 c

12

FIG. 2d

FIG. 2e

FIG. 3

FIG. 4

FIG.5